# EUROPÄISCHE PATENTSCHRIFT

(11) **EP 1 107 864 B1**
(45) Veröffentlichungstag und Bekanntmachung des Hinweises auf die Patenterteilung: **18.02.2004**
(21) Anmeldenummer: 99936614.9
(22) Anmeldetag: 28.07.1999
(51) Int. Cl.: B31B 19/98

(54) **VERFAHREN UND VORRICHTUNG ZUM STAPELWEISE VERBLOCKEN VON KUNSTSTOFFBEUTELN, INSBESONDERE AUTOMATENBEUTELN DURCH VERSCHWEISSEN**
METHOD AND DEVICE FOR INTERLOCKING STACKWISE PLASTIC BAGS, ESPECIALLY BAGS FOR AUTOMATIC MACHINES, BY WELDING
PROCEDE ET DISPOSITIF PERMETTANT DE REUNIR PAR SOUDURE DES SACHETS PLASTIQUE EMPILES, NOTAMMENT DES SACHETS POUR MACHINES AUTOMATIQUES

(30) Priorität: 28.08.1998 DE 19839155
(43) Veröffentlichungstag der Anmeldung: 20.06.2001
(73) Patentinhaber: LEMO Maschinenbau GmbH, D-53859 Niederkassel-Mondorf (DE)
(72) Erfinder: SCHULZE, Peter, D-40670 Meerbusch (DE)
(74) Vertreter: Thul, Hermann, Dipl.-Phys.
(86) Internationale Anmeldenummer: PCT/EP1999/005398
(87) Internationale Veröffentlichungsnummer: WO 2000/012299

(56) Entgegenhaltungen:
- EP-A- 0 384 281
- US-A- 3 917 505
- US-A- 4 670 083

## Beschreibung

### Technisches Gebiet

Die Erfindung bezieht sich zunächst auf ein Verfahren zum Abtransportieren von gestapelten Kunststoffbeuteln, insbesondere Automatenbeuteln, die in einer Stapelbildungsstelle einer Stapelstifte aufweisenden Stiftstapelfördereinrichtung gesammelt und getaktet einer nachfolgenden Entnahmestelle der Stiftstapelfördereinrichtung zugeführt werden, wonach der Beutelstapel von einer Greifhand, die an einem Auslegearm eines Roboters montiert ist, erfaßt und von der Entnahmestelle in eine Ablagestation übergeben wird. Im weiteren bezieht sich die Erfindung auf eine Vorrichtung zur Durchführung des Verfahrens.

### Stand der Technik

Bei Kunststoffbeuteln der in Rede stehenden Art, insbesondere Automatenbeuteln, ist es bekannt, daß die Beutel bei ihrer Herstellung mit Aufhänge- bzw. Stapelöffnungen versehen und im unmittelbaren Anschluß an ihre Herstellung auf Stapelstiften einer Stiftstapelkette paketweise abgelegt werden, um so einen Stapel von Beuteln zu bilden. Nachdem auf jeweils einem Stiftstapelpaar eine ausreichende Menge von Beuteln aufgestapelt ist, wird das betreffende Stiftstapelpaar weiterbewegt, damit auf dem nachfolgenden Stiftstapelpaar der umlaufend angetriebenen Stiftstapelkette von neuem Beutelstapel gebildet werden können. Um einen Zusammenhalt der einzelnen Kunststoffbeutel im jeweiligen zu gewährleisten, wird eine Verblockung direkt auf der Stiftstapelkette durchgeführt. Zum Verblocken ist eine aufwendige Verblockungsstation erforderlich. Diese ist nicht nur teuer, sondern sie benötigt auch viel Platz, so daß die Stiftstapelkette vergleichsweise lang ist. Beutelstapel der in Rede stehenden Art gehen beispielsweise aus dem deutschen Gebrauchsmuster 74 29 628 hervor. Zum Verblocken des Beutelstapels verwendet man sogenannte Glühkerzen bzw. Glühdorne, die nach starker Erhitzung durch den Beutelstapel durchgedrückt werden. An der Durchdrückstelle kann gegebenenfalls vorher eine Stanzöffnung eingebracht werden. Das Verblocken der Kunststoffbeutel im Beutelstapel erfolgt unmittelbar hinter dem eigentlichen Stapelvorgang, also innerhalb des Bereiches der Stiftstapelfördereinrichtung. Am Ende der Stiftstapelfördereinrichtung wird der verblockte Beutelstapel von einer Bedienungsperson entnommen, gegebenenfalls nochmals im Rahmen einer Qualitätskontrolle begutachtet und schließlich einem Abtransport zugeführt.

Bei Beutelstapeln, die nicht durch Verschweißen miteinander verblockt werden, sondern durch das Einbringen eines Drahtbügels mit zusätzlichen Sicherungsscheiben bzw. Gummistopfen verbunden werden, ist es wegen der umfangreichen Maßnahmen, die zur Bildung eines Beutelstapels erforderlich sind, auch schon bekanntgeworden, die manuelle Handhabung durch den Einsatz eines Roboters zu ersetzen, wie dies beispielsweise im einzelnen in der EP 0 384 281 A1 beschrieben und dargestellt ist.

Aus der US 4,670,083 ist eine Positionier- und Verblockungseinrichtung für Beutelstapel bekannt. Dabei werden die Beutelstapel über ein Förderband in den Arbeitsbereich der Glühdome zum Verblocken der Beutelstapel gegen einen festen Anschlag verfahren und anschließend mittels einer Fixiereinrichtung festgeklemmt. Das Klemmen erfolgt über eine über dem Beutetstapel angeordnete Traverse an der die Fixiereinrichtung und die Glührdome befestigt sind und die über einen Pneumatikzylinder gegen den Beutelstapel verfährt. Nach dem Verblocken des Beutelstapels gibt die Fixiereinrichtung den Beutelstapel wieder frei und der Anschlag wird heruntergefahren, so daß der nun verblockte Beutelstapel mittels der Förderbänder weitertransportiert werden kann.

### Darstellung der Erfindung

Der Erfindung liegt die Aufgabe zugrunde, ein Verfahren und eine Vorrichtung der eingangs genannten Art vorzuschlagen, durch das das Abtransportieren von gestapelten Kunststoffbeuteln und das Verblocken der gestapelten Beutel weiter vereinfacht wird. Zugleich soll der bauliche Aufwand verringert werden. Zur Lösung dieser Aufgabe wird bei einem Verfahren der in Rede stehenden Art vorgeschlagen, daß die Beutelstapel von einer die Greifhand bildenden, mit einer unteren und oberen Klemmleiste versehenen Klemmeinrichtung eingeklemmt und mittels einer mit den Klemmleisten zusammenwirkenden Verblockungseinrichtung nach dem Klemmen verblockt werden. Die Vorrichtung löst die gestellte Aufgabe dadurch, daß in die Greifhand eine eine Wärmequelle aufweisenden Verblockungseinrichtung und eine aus oberen und unteren Klemmleisten bestehende Klemmeinrichtung integriert ist, wobei die Verblockungseinrichtung als Wärmequelle unabhängig von den Klemmleisten verstellbare Glühdome oder dergleichen aufweist. Im einzelnen sieht die Erfindung vor, daß der auf einem Stiftstapelpaar lagegerecht gehaltene Beutelstapel von der Greifhand des Roboters klemmend erfaßt wird und unmittelbar danach das Verschweißen des Stapels erfolgt. Bei sehr hohen Produktionsgeschwindigkeiten kann das Verblocken des Beutelstapels sogar während des durch den Roboter durchgeführten Abtransportes des Beutelstapels zu einer Übergabestation erfolgen. Das bedeutet also, daß keine separate Zeit für das Verblocken erforderlich ist, vielmehr wird die ohnehin erforderliche Transportzeit, die der Roboter von der Übernahme des Beutelstapels von der Stiftstapelfördereinrichtung bis zur Übergabe an eine Abgabestation benötigt, für das Verblocken ausgenutzt.

Beim neuen System entfällt der sonst erforderliche Aufwand des Blockgerätes für das Gehäuse und die Klemmeinrichtung. Außerdem können die zum Blockieren in der Stiftstapelkette vorgesehenen frei hängenden Stationen zu manuellen oder automatischen Richt- und Überwachungsfunktionen genutzt werden.

Im Bedarfsfall können die verblockten Beutelstapel in der Übergabestation über im Beutelstapel eingebrachte Stapellöcher zur Zwischenlagerung aufgehängt werden. Auf diese Weise haben die Verblockungsstellen genügend Zeit zum Abkühlen, so daß die nach der Erfindung verblockten Beutelstapel relativ rasch in Kartons oder dergleichen verpackt werden können.

In zweckmäßiger Ausgestaltung der Erfindung ist die Verblockungseinrichtung an einer Tragplatte der Greifhand befestigt und zwar idealerweise an einem an der Tragplatte verstellbar gelagerten Querprofil, das vorzugsweise T-förmige Nuten aufweist. Auf diese Weise ist eine dem jeweiligen Format der Kunststoffbeutel anpaßbare Einstellung möglich. Für das Verschweißen an sich reicht eine Wärmequelle, vorzugsweise zwei mit Abstand zueinander angeordnete Glühkerzen und eine zu deren Verstellung geeignete Zylinder-Kolben-Einheit, beispielsweise in Form eines Luftzylinders, aus.

Als besonders zweckmäßig hat es sich herausgestellt, wenn die Glühkerzen im Bereich jeweils einer ersten Klemmleiste der Greifhand angeordnet sind, die sowohl zu einer zweiten Klemmleiste der Greifhand als auch zu den Glühkerzen relativ verstellbar ist.

Optimale Verhältnisse bezüglich der Klemmung und der Verblockung ergeben sich dann, wenn die beiden Glühkerzen beidseitig außerhalb der Klemmstellen der Klemmleisten der Greifhand angeordnet sind.

Auf diese Weise ist es relativ einfach möglich, die oben liegende Klemmleiste als Abstreifer für den verblockten Beutelstapel auszubilden, wenn z. B. die Klemmleiste mit einer Durchtrittsöffnung für die jeweils zugeordnete Glühkerze versehen wird.

### Kurze Beschreibung der Zeichnung

Ein bevorzugtes Ausführungsbeispiel der Erfindung ist in der Zeichnung dargestellt und wird im folgenden näher erläutert. Es zeigen:
- Figur 1: eine Seitenansicht einer Kunststoffbeutel-Herstellmaschine mit einer Stiftstapelfördereinrichtung und einem nachgeordneten Roboter mit einer eine integrierte Verblockungseinrichtung aufweisenden Greifhand,
- Figur 2: eine Aufsicht auf die in Figur 1 gezeigte Maschine,
- Figur 3: eine perspektivische Darstellung eines einzelnen Kunststoffbeutels,
- Figur 4: eine entsprechende Darstellung eines aus mehreren Kunststoffbeuteln bestehenden, verblockten Beutelstapels,
- Figur 5: eine Vorderansicht der Greifhand des Roboters mit integrierter Verblockungseinrichtung,
- Figur 6: die zugehörige Seitenansicht und
- Figur 7: eine Aufsicht auf die Greifhand.

### Wege zur Ausführung der Erfindung

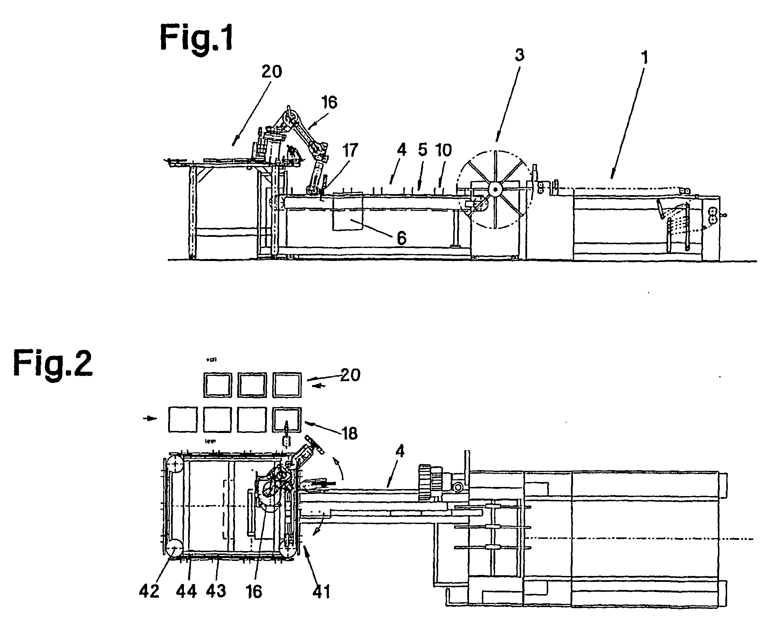

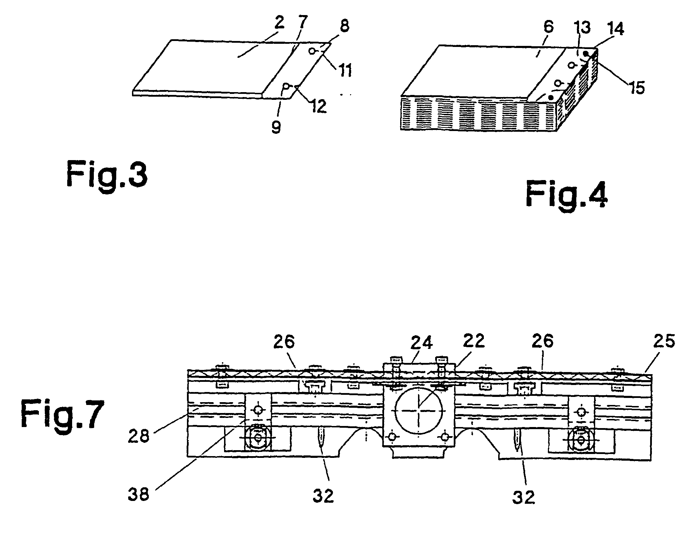

In Figur 1 ist eine Beutelherstellmaschine 1 schematisch dargestellt, die zum Herstellen von Kunststoffbeuteln 2 (Figur 3), insbesondere von sogenannten Automatenbeuteln ausgebildet und eingerichtet ist. Jeder Kunststoffbeutel 2 weist im Bereich einer Einfüllöffnung 7 eine einseitig überstehende Oberlasche 8 auf, in die zwei Aufhängelöcher 9 eingestanzt sind, denen im geringen Abstand in Richtung auf die Außenkante 11 der Oberlasche 8 Abreißperforationsschlitze 12 zugeordnet sind.

Die vorbeschriebenen Kunststoffbeutel werden aus einer thermoplastischen Kunststofffolienbahn hergestellt, die von einem nicht dargestellten Abwickelstand von einer Wickelrolle abgewickelt und zu einer Schlauchfolienbahn geformt werden kann. Innerhalb der Beutelherstellmaschine 1 wird die Schlauchfolienbahn über nicht dargestellte Antriebswalzen und Spannwalzen geführt. Mittels einer gleichfalls nicht dargestellten Lochstanzeinrichtung und einer Quertrennschweißeinrichtung lassen sich in bekannter Weise die oben erwähnten Kunststoffbeutel 2 herstellen. An die Quertrennschweißeinrichtung schließt sich eine Überführungseinrichtung 3 an, an die sich schließlich eine Stiftstapelfördereinrichtung 4 mit einer schrittweise umlaufend angetriebenen Stiftstapelkette 5 anschließt. An der Stiftstapelkette 5 sind jeweils mit Abstand zueinander paarweise angeordnete Stapelstifte 10 aufrecht stehend befestigt, auf denen in bekannter Weise hinter der Überführungseinrichtung 3 jeweils ein Beutelstapel gebildet werden kann, wie er in Figur 1 und Figur 4 mit 6 bezeichnet ist. Auf der Stiftstapelförderkette 5 sind die Kunststoffbeutel lediglich über die Stapelstifte 10 gehalten. Für die weitere Handhabung, insbesondere den Abtransport der Beutelstapel 6, müssen die Beutelstapel 6 miteinander verblockt werden, beispielsweise in der Weise, wie das in Figur 4 dargestellt ist. In durch Perforationslinien 13 im Randbereich 8 abgetrennten Eckbereichen 14 werden in weiter unten näher beschriebener Weise Verblockungspunkte 15 eingebracht, über die sämtliche Kunststoffbeutel 2 im Stapel miteinander verblockt sind. Derart verblockte Beutelstapel lassen sich mit Hilfe eines am Ende der Stiftstapelfördereinrichtung angeordneten Roboters 16 mittels einer Greifhand 17 übernehmen und entsprechend einer vorgegebenen Steuerung in eine Kassettenstation 18 einer Entladestation 20 abgeben.

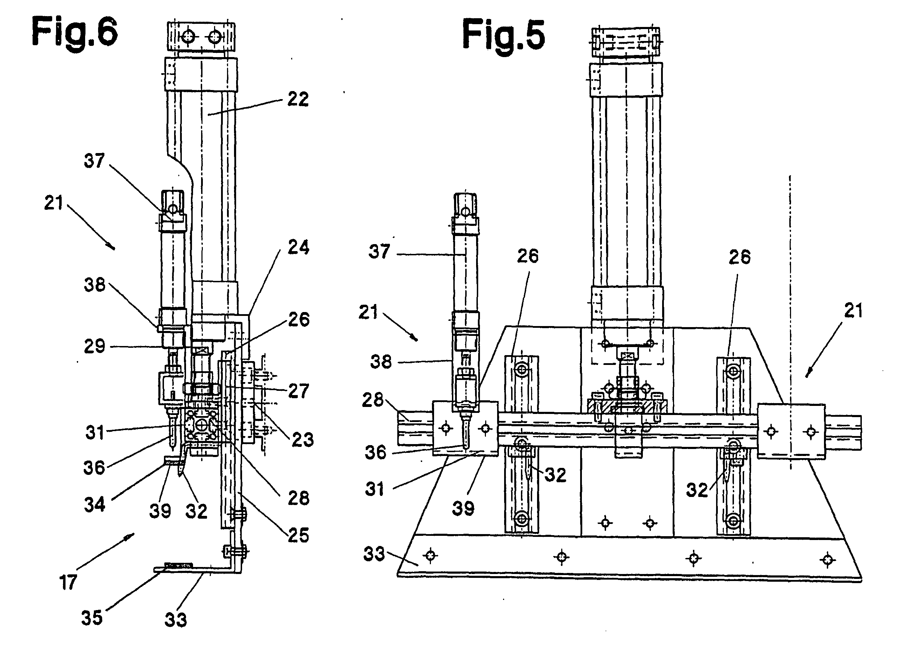

Der Roboter 16 bzw. die Greifhand hat eine Mehrfachfunktion. So kann mittels des Roboters nicht nur der Beutelstapel 6 vom Stiftstapelförderer 4 entnommen und in die Entladestation abgegeben werden, sondern zugleich ist die Greifhand 17 mit einer integrierten Verblockungseinrichtung 21 ausgerüstet, die sich im einzelnen aus den Figuren 5 bis 7 ergibt. Die Greifhand 17 wird von einer Zylinder-Kolben-Einheit 22 getragen, die bei 23 an einem Auslegearm des Roboters 16 schwenkbar gelagert ist. Die Zylinder-Kolben-Einheit 22 stützt sich auf einem Winkelstück 24 ab, an dem eine im wesentlichen trapezförmig ausgebildete Tragplatte 25 befestigt ist. Die vorzugsweise aus geriffeltem Aluminiumblech bestehende Tragplatte 25 besitzt auf ihrer Vorderseite zwei mit Abstand zueinander angeordnete Führungsleisten 26, in denen jeweils über ein Führungselement 27 ein Querträger 28 axial verschiebbar gelagert ist. Der Querträger 28 weist ein im Querschnitt mehrfaches T-Nutenprofil auf. In den einzelnen Nuten sitzen einmal das Führungselement 27, andererseits ein Stempel 29 der Zylinder-Kolben-Einheit 22 sowie an der Vorderseite eine L-förmig ausgebildete Klemmleiste 31 und an der Unterseite abgewinkelt ausgebildete Fangstifte 32, deren Abstand dem Abstand der Aufhängelöcher 9 in den Kunststoffbeuteln 2 entspricht. Im Zusammenwirken mit der oberen Klemmleiste 31 ist eine untere Klemmleiste 33 am unteren Ende der Tragplatte 25 befestigt. Beide Klemmleisten können mit einem elastischen Belag 34 und 35 ausgelegt sein. Im dargestellten Ausführungsbeispiel ist die obere Klemmleiste 31 von zwei mit Abstand zueinander angeordneten Leistenabschnitten gebildet.

Die oben erwähnte Verblockungseinrichtung 21 weist eine Wärmequelle in Form von zwei mit Abstand zueinander angeordneten Glühkerzen 36 auf, von denen in Figur 5 nur die auf der linken Seite angeordnete Glühkerze gezeigt ist. Die auf der rechten Seite befindliche Glühkerze mit ihrer Antriebseinrichtung ist identisch ausgebildet und daher im einzelnen nicht dargestellt. Glühkerzen bzw. Glühdorne der gezeigten Art sind an sich bekannt. In jedem Fall gehört zum axialen Verstellen der Glühkerze 36 eine Zylinder-Kolben-Einheit 37 in Gestalt eines Luftzylinders. Die Zylinder-Kolben-Einheit ist über einen Halter 38 an dem Querprofil 28 einstellbar befestigt. Die obere Klemmleiste 31 besitzt jeweils eine Durchtrittsöffnung 39 für den Hindurchtritt der Glühkerze 36. Der Abstand der beiden Glühkerzen 36 liegt außerhalb der Fangstifte 32.

### Die erfindungsgemäße Vorrichtung arbeitet wie folgt:

Nach der Bildung eines Beutelstapels 6 in der Stiftstapelfördereinrichtung 4 gelangt jeder Beutelstapel 6 in die in Figur 1 dargestellte Stellung. Dort wird der Beutelstapel, der bis dahin noch nicht verblockt ist, zwischen den Klemmleisten 31 und 33 der Greifhand 17 des Roboters 16 klemmend gehalten, wobei die Fangstifte 32 in die Aufhängelöcher 9 der Kunststoffbeutel eingreifen. Unmittelbar nach dem Erfassen und Klemmen des Beutelstapels erfolgt das Verblocken des Beutelstapels durch Verschweißen mit Hilfe der in die Greifhand 17 des Roboters 16 integrierten Verblockungseinrichtung 21. Zum Zwecke des Verblockens wird während des Klemmens des Beutelstapels über den Luftzylinder 37 die als Wärmequelle dienenden Glühkerzen 36 in das Beutelpaket eingefahren und zwar an den Eckbereichen 14, um auf diese Weise die Verblockungsstellen 15 gemäß des in Figur 4 dargestellten Beutelpakets zu bilden. Entweder erfolgt dieses Verblocken noch in der Stiftstapeleinrichtung, zweckmäßigerweise wird jedoch unmittelbar nach dem Erfassen und Klemmen des Beutelstapels der Abtransport des Beutelstapels zu einer Abgabe- bzw.

Entladestation durchgeführt. Vorzugsweise während dieser Transportbewegung wird auch gleichzeitig die Verblockung durchgeführt. Nach kurzer Verweitzeit der Glühkerze im Beutelstapel wird diese zurückgefahren und die Glühkerze in ihre Ruhestellung zum Erkalten der Verblockung gebracht. Beim Zurückfahren fungiert die obere Klemmleiste 31 jeweils als Abstreifer. Nach dem Verblocken kann das Beutelpaket unmittelbar über die Greifhand des Roboters 16 in die Entladestation 20 gebracht werden, so wie das in Figur 2 gezeigt ist.

Alternativ ist es aber auch möglich, den verblockten Beutelstapel 6 in eine Zwischenablage zu bringen, damit die Verblockungsstellen abkühlen können. Dies kann beispielsweise in der Weise geschehen, daß der Beutelstapel an eine Kontrolleinheit 41 gebracht wird (Figur 2). Von dieser Kontrolleinheit können die Beutelstapel manuell in einen Karton abgelegt werden oder aber auch wieder durch den Roboter. Schließlich können zum Abkühlen die Beutel auf einem Plattenkarussell aufgehängt werden. Ein derartiges Plattenkarussell ist in Figur 2 angedeutet und umfaßt Umlenkwalzen 42 mit Tragplatten 43 und daran befestigten Bügeln 44.

Es zeigt sich, daß durch die Anordnung des Roboters am Ende der Stiftstapelfördereinrichtung und dessen mannigfache Ausnutzung sowohl für den Abtransport der Beutelstapel als auch für deren Verblockung eine universelle Einsatzmöglichkeit für die unterschiedlichsten Beutelarten gegeben ist. Es können somit auch ohne weiteres andere Beutelarten, wie z. B. Hemdchentragetaschen, gemäß der Erfindung verblockt werden.

## Patentansprüche

1. Verfahren zum Abtransportieren von gestapelten Kunststoffbeuteln (6), insbesondere Automatenbeuteln, die in einer Stapelbildungsstelle einer Stapelstifte (10) aufweisenden Stiftstapelfördereinrichtung (4) gesammelt und getaktet einer nachfolgenden Entnahme-, stelle der Stiftstapelfördereinrichtung (4) zugeführt werden, wonach der Beutelstapel (6) von einer Greifhand (17), die an einem Auslegearm eines Roboters (16) montiert ist, erfaßt und von der Entnahmestelle in eine Ablagestation (20) übergeben wird, **dadurch gekennzeichnet, daß** die Beutelstapel (6) von einer die Greifhand (17) bildenden, mit einer unteren (33) und oberen (31) Klemmleiste versehenen Klemmeinrichtung eingeklemmt und mittels einer mit den Klemmleisten (31, 33) zusammenwirkenden Verblockungseinrichtung (21) nach dem Klemmen verblockt werden.

2. Verfahren nach Anspruch 1, **dadurch gekennzeichnet, daß** das Verblocken des Beutelstapels (6) während des durch den Roboter (16) durchgeführten Abtransportes des Beutelstapels (6) zu einer Übergabestation erfolgt.

3. Verfahren nach Anspruch 2, **dadurch gekennzeichnet, daß** die verblockten Beutelstapel (6) über im Beutelstapel (6) eingebrachte Stapellöcher (9) zur Zwischenlagerung aufgehängt werden.

4. Vorrichtung zum Abtransportieren von Kunststoffbeuteln (6), insbesondere Automatenbeuteln mit einer Stiftstapelfördereinrichtung (4) mit einer schrittweise umlaufend angetriebenen Stiftstapelkette (5) mit daran jeweils paarweise befestigten Stapelstiften (10) zur Aufnahme der Beutel und Stapelbildung sowie einer an einem Auslegearm eines Roboters (16) befestigten Greifhand (17), **dadurch gekennzeichnet, daß** in die Greifhand (17) eine eine Wärmequelle aufweisende Verblockungseinrichtung (21) und eine aus oberen (31) und unteren (33) Klemmleisten bestehende Klemmeinrichtung integriert ist, wobei die Verblockungseinrichtung (21) als Wärmequelle unabhängig von den Klemmleisten (31, 33) verstellbare Glühdome (36) oder dergleichen aufweist.

5. Vorrichtung nach Anspruch 4, **dadurch gekennzeichnet, daß** die Verblockungseinrichtung (21) an einer Tragplatte (25) der Greifhand (17) verdrehfest befestigt ist,

6. Vorrichtung nach Anspruch 5, **dadurch gekennzeichnet, daß** die Verblockungseinrichtung (21) über einen Halter (24) an einem an der im wesentlichen trapezförmigen Tragplatte (25) verstellbar gelagerten, T-Nuten aufweisenden Querprofil (28) einstellbar befestigt ist.

7. Vorrichtung nach einem oder mehreren der Ansprüche 4 bis 6, **dadurch gekennzeichnet, daß** die Verblockungseinrichtung (21) eine Wärmequelle, vorzugsweise mit Abstand zueinander angeordnete Glühkerzen (36) und jeweils eine zu deren axialen Verstellung zwischen einer Arbeitsstellung und einer Ruhestellung dienende Zylinder-Kolben-Einheit (22) aufweist, die vorzugsweise als Luftzylinder ausgebildet ist.

8. Vorrichtung nach einem oder mehreren der Ansprüche 4 bis 7, **dadurch gekennzeichnet, daß** die Glühkerzen (36) im Bereich einer ersten Klemmleiste (31) der Greifhand (17) angeordnet sind, die sowohl zu einer zweiten Klemmleiste (33) der Greifhand als auch zu den Glühkerzen (36) relativ verstellbar ist.

9. Vorrichtung nach einem oder mehreren der Ansprüche 4 bis 8, **dadurch gekennzeichnet, daß** die beiden Glühkerzen (36) beidseitig außerhalb der Fangstifte (32) der Greifhand (17) angeordnet sind.

10. Vorrichtung nach einem oder mehreren der Ansprüche 4 bis 9, **dadurch gekennzeichnet, daß** die erste Klemmleiste Durchtrittsöffnungen (39) für die Glühkerzen (36) aufweist.

11. Vorrichtung nach einem oder mehreren der Ansprüche 4 bis 10, **dadurch gekennzeichnet, daß** die erste Klemmleiste (31) als Abstreifer für den verblockten Beutelstapel (6) dient.

## Claims

1. Method of transporting away stacked plastic bags (6), in particular vending-machine bags, which are collected in a stack-forming location of a wicket conveyor (4), having wicket pins (10), and are fed cyclically to a following removal location of the wicket conveyor (4), whereupon the bag stack (6) is gripped by a gripping hand (17), mounted on an extension arm of a robot (16), and is transferred from the removal location into a set-down station (20), **characterized in that** the bag stacks (6) are clamped in by a clamping arrangement, which forms the gripping hand (17) and is provided with a bottom clamping bar (33) and a top clamping bar (31), and, following the clamping operation, are blocked by means of a block-forming arrangement (21) which interacts with the clamping bars (31, 33).

2. Method according to Claim 1, **characterized in that** the block formation of the bag stack (6) takes place as the bag stack (6) is transported away by the robot (16) to a transfer station.

3. Method according to Claim 2, **characterized in that** the block-form bag stacks (6) are hung up, for interim-storage purposes, via stacking holes (9) which are made in the bag stack (6).

4. Apparatus for transporting away plastic bags (6), in particular vending-machine bags, having a wicket conveyor (4), with a wicket chain (5) which is driven cyclically in a stepwise manner and has wicket pins (10) fastened thereon in pairs in each case for receiving the bags and stack-forming purposes, and a gripping hand (17), which is fastened on an extension arm of a robot (16), **characterized in that** a block-forming arrangement (21), which has a heat source, and a clamping arrangement, which comprises top (31) and bottom (33) clamping bars, are integrated in the gripping hand (17), the block-forming arrangement (21) having, as a heat source, hot mandrels (36) or the like which can be adjusted independently of the clamping bars (31, 33).

5. Apparatus according to Claim 4, **characterized in that** the block-forming arrangement (21) is fastened in a rotationally fixed manner on a carrying plate (25) of the gripping hand (17).

6. Apparatus according to Claim 5, **characterized in that** the block-forming arrangement (21) is fastened in an adjustable manner, via a holder (24), on a transverse profile (28), which is mounted in an adjustable manner on the essentially trapezoidal carrying plate (25) and has T-shaped grooves.

7. Apparatus according to one or more of Claims 4 to 6, **characterized in that** the block-forming arrangement (21) has a heat source, preferably spaced-apart heater plugs (36), and in each case one cylinder/piston unit (22), which serves for axially adjusting the latter between an operating position and a rest position and is preferably designed as an air cylinder.

8. Apparatus according to one or more of Claims 4 to 7, **characterized in that** the heater plugs (36) are arranged in the region of a first clamping bar (31) of the gripping hand (17), which can be adjusted relative both to a second clamping bar (33) of the gripping hand and to the heater plugs (36).

9. Apparatus according to one or more of Claims 4 to 8, **characterized in that** the two heater plugs (36) are arranged on both sides outside the collecting pins (32) of the gripping hand (17).

10. Apparatus according to one or more of Claims 4 to 9, **characterized in that** the first clamping bar has through-passage openings (39) for the heater plugs (36).

11. Apparatus according to one or more of Claims 4 to 10, **characterized in that** the first clamping bar (31) serves as a stripper for the block-form bag stack (6).

## Revendications

1. Procédé pour transporter des sachets plastiques empilés (6), notamment des sachets pour machines automatiques, qui sont acheminés, de manière rassemblée et cadencée dans une position de formation de pile d'un dispositif de transport de piles à aiguilles (4) présentant des aiguilles d'empilage (10), à une position de prélèvement subséquente du dispositif de transport de piles à aiguilles (4), la pile de sachets (6) étant saisie par une main de préhension (17), qui est montée sur un bras de support d'un robot (16), et étant transférée de la position de prélèvement dans un poste de dépose (20), **caractérisé en ce que** les piles de sachets (6) sont serrées par un dispositif de serrage pourvu d'une barre de serrage inférieure (33) et supérieure (31), formant la main de préhension (17) et sont bloquées après le serrage au moyen d'un dispositif de blocage (21) coopérant avec les barres de serrage (31, 33).

2. Procédé selon la revendication 1, **caractérisé en ce que** le blocage de la pile de sachets (6) pendant le transport de la pile de sachets (6) effectué par le robot (16) s'effectue vers un poste de transfert.

3. Procédé selon la revendication 2, **caractérisé en ce que** les piles de sachets bloquées (6) sont suspendues par le biais de perforations d'empilage (9) prévues dans la pile de sachets (6) en vue de leur stockage intermédiaire.

4. Dispositif pour transporter des sachets plastiques (6), notamment des sachets pour machines automatiques, avec un dispositif de transport de piles à aiguilles (4) comprenant une chaîne de piles à aiguilles (5) entraînée en rotation pas-à-pas avec des aiguilles d'empilage (10) fixées à celle-ci par paires respectives pour recevoir les sachets et pour la formation de piles ainsi qu'une main de préhension (17) fixée sur un bras de support d'un robot (16), **caractérisé en ce que** dans la main de préhension (17) sont intégrés un dispositif de blocage (21) présentant une source de chaleur et un dispositif de serrage se composant d'une barre de serrage supérieure (31) et inférieure (33), le dispositif de blocage (21) présentant, en tant que source de chaleur, des mandrins incandescents (36) réglables indépendamment des barres de serrage (31, 33), ou similaires.

5. Dispositif selon la revendication 4, **caractérisé en ce que** le dispositif de blocage (21) est fixé de manière fixe en rotation à une plaque porteuse (25) de la main de préhension (17).

6. Dispositif selon la revendication 5, **caractérisé en ce que** le dispositif de blocage (21) est fixé de manière ajustable par le biais d'un élément de fixation (24) sur un profilé transversal (28) présentant des rainures en T, monté de manière déplaçable sur la plaque porteuse (25) de forme essentiellement trapézoïdale.

7. Dispositif selon l'une ou plusieurs des revendications 4 à 6, **caractérisé en ce que** le dispositif de blocage (21) présente une source de chaleur, de préférence des bougies de préchauffage (36) espacées les unes des autres, et à chaque fois une unité cylindre-piston (22) servant à leur déplacement axial entre une position de travail et une position de repos, laquelle est réalisé de préférence sous la forme d'un cylindre pneumatique.

8. Dispositif selon l'une ou plusieurs des revendications 4 à 7, **caractérisé en ce que** les bougies de préchauffage (36) sont disposées dans la région d'une première barre de serrage (31) de la main de préhension (17), qui est à la fois déplaçable relativement par rapport à une deuxième barre de serrage (33) de la main de préhension et par rapport aux bougies de préchauffage (36).

9. Dispositif selon l'une ou plusieurs des revendications 4 à 8, **caractérisé en ce que** les deux bougies de préchauffage (36) sont disposées de part et d'autre en dehors des aiguilles d'accrochage (32) de la main de préhension (17).

10. Dispositif selon l'une ou plusieurs des revendications 4 à 9, **caractérisé en ce que** la première barre de serrage présente des ouvertures de passage (39) pour les bougies de préchauffage (36).

11. Dispositif selon l'une ou plusieurs des revendications 4 à 10, **caractérisé en ce que** la première barre de serrage (31) sert de dispositif de raclage pour la pile de sachets bloquée (6).
